(19) **Europäisches Patentamt / European Patent Office / Office européen des brevets**

(11) **EP 2 227 670 B1**

(12) **EUROPEAN PATENT SPECIFICATION**

(45) Date of publication and mention
of the grant of the patent:
**02.11.2011 Bulletin 2011/44**

(21) Application number: **08807713.6**

(22) Date of filing: **18.09.2008**

(51) Int Cl.:
*G01B 7/34* *(2006.01)*     *G01B 21/30* *(2006.01)*

(86) International application number:
**PCT/IB2008/053794**

(87) International publication number:
**WO 2009/037661 (26.03.2009 Gazette 2009/13)**

(54) **MONITORING AND DETECTION SYSTEM FOR SCUFFING BETWEEN PISTONS AND LINERS IN RECIPROCATING MACHINES**

ÜBERWACHUNGS- UND DETEKTIONSSYSTEM FÜR DEN VERSCHLEISS ZWISCHEN KOLBEN UND DECKSCHICHTEN IN PENDELNDEN MASCHINEN

SYSTÈME DE SURVEILLANCE ET DE DÉTECTION DE L'USURE ENTRE LES PISTONS ET CHEMISES DANS DES MACHINES ALTERNATIVES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.09.2007 PT 10382607**

(43) Date of publication of application:
**15.09.2010 Bulletin 2010/37**

(73) Proprietor: **Tecnoveritas - Serviços De Engenharia E Sistemas Tecnológicos, Lda.**
**P-2640-486 Mafra (PT)**

(72) Inventor: **GOMES ANTUNES, Jorge, Manuel**
**P-2665-101 Gradil (PT)**

(74) Representative: **Carpintero Lopez, Francisco et al**
**Herrero & Asociados, S.L.**
**Alcalá 35**
**28014 Madrid (ES)**

(56) References cited:
**EP-A- 0 438 360     EP-A- 0 652 426**
**GB-A- 1 503 255     US-A- 4 143 319**

## Description

## Technical Field of the Invention

The system object is to detect, monitor and alarm the development of the scuffing event between the pistons and liners in internal combustion engines with two and four strokes, as well as other reciprocating machines, such as compressors.

## State of the Art

The usually adopted technique in experimental work is based on the use of thermocouples inserted on the cylinder's liners. This technique, which is based on detecting the raise of the temperature in the liners, has been showing a lack sensitivity due to:

-high thermal inertia on liners,

-liners being refrigerated,

-the heat production originated by the scuffing event due to the adhesion being minimal, not allowing the event's occurrence detection.

EP 0 438 360 discloses an apparatus for assessing the scuffling of the piston rings, as well as a procedure to attain such an assessment, wherein the use of a coating material resistant to scuffing is described.

US 4,143,319 discloses a method to determine the scuffing on the piston rings, which is, once more, related to the use of a specific coating and is based on determining the found deviations between the magnetic fields therefore established.

US 2003/177821 discloses an apparatus which determines the upper dead centre using measurements obtained through Eddy's effect sensors.

EP-A-0 652 426 discloses a method for the early recognotion of piston and/or cylinder disturbances using a temperature sensor.

## Description of the Drawings

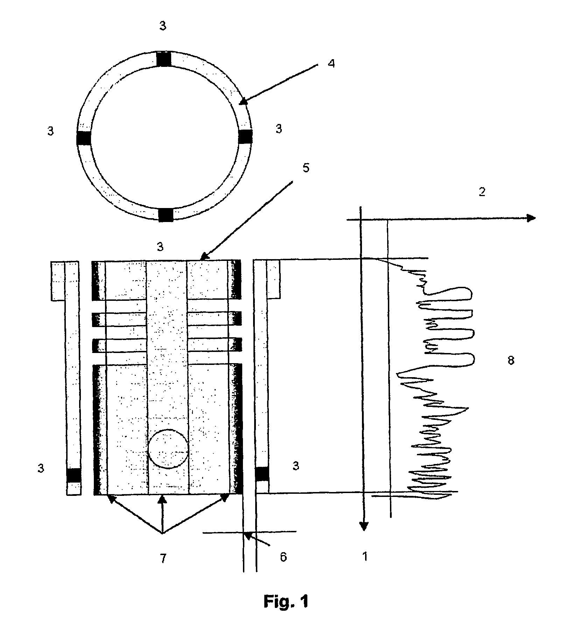

Fig. 1 - Position of the sensors in liners and roughness chart as a function of the piston stroke.

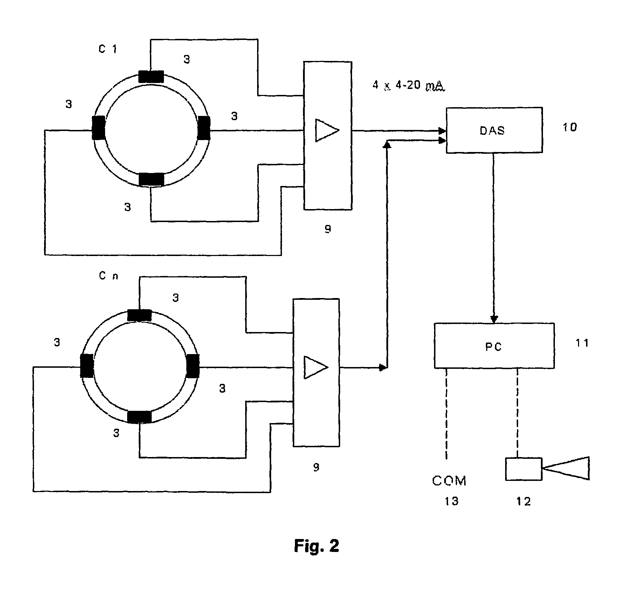

Fig. 2 - Block diagram of the system with two cylinders, showing the sensor's position.

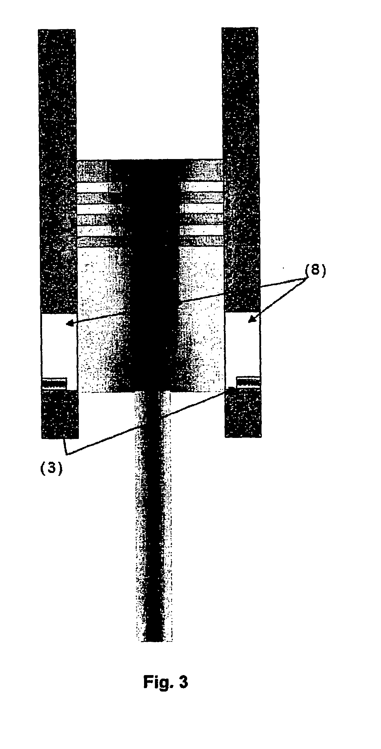

Fig. 3 - Cylinder's cut view, showing the sensor's position (3) inside the scavenging ports (8) of a two stroke engine.

## Detailed Description of the Invention

The scuffing event is triggered due to the combined effect of the non existence of a lubricating oil film and the contact between the piston and the inside surface of the liner.

Due to the contact between the surfaces and to the high forces involved cold micro welds develop which drag material from both surfaces due to the shear forces, leaving such material attached and producing an accelerated scuffing effect on the areas of extensive contact.

The micro welding phenomenon is such that it usually proceeds without significant heat production. Considering the dimension of the components, it does not produce enough heat to accomplish a significant temperature raise in those components, furthermore being such components cooled using water. Applying temperature sensors on pistons is quite difficult considering the high temperatures at which they operate and because they widely vary according to the load, the signal must be transmitted from a mobile component, such as the piston, to the exterior of the engine, being this equally cooled with the aid of oil.

Thus, due to the non significant raise of temperature of the contact components (piston and liner), the use of temperature transductors, such as thermopairs or Pt100, will only allow the detection of that event in an advanced stage of impairment of the liner and the piston, frequently resulting in catastrophic destruction of such components.

The novelty of this system resides not in using temperature as the indicating variable for the scuffing phenomena but in using the measurement of the roughness on the surface of the piston from its crown to the bottom of the skirt. The monitoring of the roughness is coordinated with the monitored crank angle and the automatic comparison with the reference roughness measured, usually recorded during its running-in allowing to define scuffing tendencies, scuffing rates, ring condition and alignment of the piston on the liner. These parameters also allow the just in time intervention in parameters such as charge and lubrication in a way that the malfunctions are reduced to minimum values in an early stage of development.

As the piston is one of the components which, similarly to the liner, is damaged by Scuffing phenomenon, monitoring the medium roughness on the surface of the piston in several longitudinal areas thereof and comparing it with the medium roughness, after running in, for each one of those standard reference areas, it is possible to establish a development rate for this event.

The measurement of the average roughness is made by a number of high resolution proximity sensors, such as Eddy current sensors. The high resolution of these proximity sensors, usually in the order of $\mu$m, allowing the measurement of the roughness on the surface of the piston from its crown to the bottom of the skirt as it is passing in front of the scavenging ports, or in front of the lower collar of the liner.

The software compares the longitudinal average roughness measured by each sensor (3), being integrated over the stroke measured in each pass of the piston, comparing it with a standard reference roughness. The number of proximity sensors (3) to be installed will depend on the cylinder bore of the engine and on the degree of coverage wanted to monitor.

Therefore, the system allows for the determination of deviations of the actual average roughness in relation to the average reference roughness, allowing the definition of the warning alarm levels.

The sensors (3) can give additional information about the cylinders condition, such as piston rings surface condition and oil film thickness.

To implement the system, a number of proximity sensors (3) is needed, for example Eddy's effect sensors nearby the scavenging ports for liners of two stroke engines or on the lower part of the liners in four stroke engines or preferably for four stroke engines with liners having machined housings for those sensors.

The proximity sensor signals are therefore amplified and conditioned on the amplifiers (9) and acquired by the data acquisition system (10) being compared to standard reference values for each one of the cylinders in a computer (11), being able to generate an audible warning signal (12) for scuffing, being able to be subsequently filed on a data base located in the computer (11) to monitor the scuffing state development for each one of the engine cylinders. Also, the signals can be sent, through a communication protocol (13), to any other system.

The mathematical approach that the monitoring system according to the invention has to do is as follows:

$$R = \int_{\theta=0}^{\theta=2\pi} r(\theta)d\theta$$

where: R represents the measured roughness;
$r(\theta)$ - average roughness measured as function of $\theta$; und
$\theta$ - crank angle;

**Industrial Applicability**

The present system is applicable in existing or new reciprocal machines, trough the installation of sensors on the lower part of the liner or in the scavenging ports, according to the intended use.

**Claims**

1. System for monitoring and detecting scuffing between a piston and a liner on reciprocating engines and machinery to determine the occurrence of scuffing by cold adhesion of said liner and said piston, **characterized in that** it comprises

   • high performance proximity sensors (3), such as Eddy current sensors, for obtaining continuous measurements of the roughness of the surface of the piston's skirt,
   • amplifiers (9) for amplifying and conditioning the signals obtained by said sensors,
   • a data acquisition system (10) for acquiring said amplified and conditioned signals, and
   • a computer (11) arranged to compare the measured roughness (R) with a standard reference roughness,

and **in that** it is arranged so as to use the following mathematical approach for the measured roughness R:

$$R = \int_{\theta=0}^{\theta=2\pi} r(\theta)\, d\theta$$

with:
$\theta$ - crank angle;
$r(\theta)$ - average roughness measured with said sensors as function of $\theta$.

2. System for monitoring and detecting the scuffing between pistons and liners on reciprocating engines and machinery according to claim 1, **characterized in that** the proximity sensors (3) are mounted nearby the scavenging ports of the liners in the two stroke engines.

3. System for monitoring and detecting the scuffing between pistons and liners on reciprocating engines and machinery according to claim 1, **characterized in that** the proximity sensors (3) being fitted on the lower part of the liners in four stroke engines.

4. System for monitoring and detecting the scuffing between pistons and liners on reciprocating engines and machinery according to claim 1, **characterized in that** the proximity sensors (3) being fitted on appropriated housings in liners of four stroke engines.

5. System for monitoring and detecting the scuffing between pistons and liners on reciprocating engines and machinery according to claim 1, **characterized in that** it allows the determination of the ring grooves on pistons through the characterization of the contact surface of the same in terms of roughness and the verification of its movement inside the respective grooves.

6. System for monitoring and detecting the scuffing between pistons and liners on reciprocal machines according to claim 1, **characterized in that** it allows the determination of the alignment of the piston in the liner through the measurement of the distance from the centre to the liner.

**7.** System for monitoring and detecting the scuffing between pistons and liners on reciprocating engines and machinery according to claim 1, **characterized in that** it allows the determination of the piston's ovalization in the liner through the determination of the difference between the distances according to the two main axes of the engine.

## Patentansprüche

**1.** Einrichtung zur Überwachung und Erfassung von Oberflächenverschleiß zwischen einem Kolben und einer Laufbuchse in Kolbenmotoren und Kolbenmaschinen zur Bestimmung des Auftretens von Oberflächenverschleiß durch kalte Haftreibung zwischen der Laufbuchse und dem Kolben, **dadurch gekennzeichnet, dass** die Einrichtung Folgendes umfasst:

- Hochleistungs-Näherungssensoren (3), zum Beispiel Wirbelstromsensoren, zum Erhalt kontinuierlicher Messungen der Oberflächenrauhigkeit des Kolbenschafts,
- Verstärkungseinrichtungen (9) zur Verstärkung und Aufbereitung der durch die Sensoren erhaltenen Signale,
- eine Datenerfassungseinrichtung (10) zur Erfassung der verstärkten und aufbereiteten Signale, und
- eine Recheneinrichtung (11), die zum Vergleich der gemessenen Rauhigkeit (R) mit einer durchschnittlichen Bezugsrauigkeit eingerichtet ist,

und dass sie zur Verwendung des folgenden mathematischen Ansatzes für die gemessene Rauhigkeit R eingerichtet ist:

$$R = \int_{\theta=0}^{\theta=2\pi} r(\theta)d\theta$$

wobei:
$\theta$ der Kurbelwinkel ist; und
$r(\theta)$ die mit den Sensoren als Funktion von $\theta$ gemessene Durchschnittsrauhigkeit ist.

**2.** Einrichtung zur Überwachung und Erfassung von Oberflächenverschleiß zwischen einem Kolben und einer Laufbuchse in Kolbenmotoren und Kolbenmaschinen nach Anspruch 1, **dadurch gekennzeichnet, dass** die Näherungssensoren (3) in Zweitaktmotoren in der Nähe der Spülkanäle der Laufbuchsen angeordnet sind.

**3.** Einrichtung zur Überwachung und Erfassung von Oberflächenverschleiß zwischen einem Kolben und einer Laufbuchse in Kolbenmotoren und Kolbenmaschinen nach Anspruch 1, **dadurch gekennzeichnet, dass** die Näherungssensoren (3) in Viertaktmotoren an dem unteren Teil der Laufbuchsen angeordnet sind.

**4.** Einrichtung zur Überwachung und Erfassung von Oberflächenverschleiß zwischen einem Kolben und einer Laufbuchse in Kolbenmotoren und Kolbenmaschinen nach Anspruch 1, **dadurch gekennzeichnet, dass** die Näherungssensoren (3) in Viertaktmotoren auf entsprechenden Gehäusen in den Laufbuchsen angeordnet sind.

**5.** Einrichtung zur Überwachung und Erfassung von Oberflächenverschleiß zwischen einem Kolben und einer Laufbuchse in Kolbenmotoren und Kolbenmaschinen nach Anspruch 1, **dadurch gekennzeichnet, dass** die Einrichtung die Vermessung von Ringnuten auf dem Kolben durch Charakterisierung der Kontaktfläche des Kolbens hinsichtlich Rauhigkeit und durch Untersuchung der Bewegung des Kolbens zwischen den entsprechenden Nuten ermöglicht.

**6.** Einrichtung zur Überwachung und Erfassung von Oberflächenverschleiß zwischen einem Kolben und einer Laufbuchse in Kolbenmaschinen nach Anspruch 1, **dadurch gekennzeichnet, dass** die Einrichtung die Bestimmung der Ausrichtung des Kolbens in der Laufbuchse durch Messung des Abstands vom Mittelpunkt des Kolbens zur Laufbuchse ermöglicht.

**7.** Einrichtung zur Überwachung und Erfassung von Oberflächenverschleiß zwischen einem Kolben und einer Laufbuchse in Kolbenmotoren und Kolbenmaschinen nach Anspruch 1, **dadurch gekennzeichnet, dass** die Einrichtung die Bestimmung der Kolbenovalität in der Laufbuchse durch Bestimmung der Differenz zwischen den Abständen bezüglich der beiden Motorhauptachsen ermöglicht.

## Revendications

**1.** Système pour surveiller et détecter une éraillure entre un piston et une chemise sur des moteurs et une machinerie alternatifs pour déterminer l'occurrence d'éraillure par adhésion à froid de ladite chemise et dudit piston, **caractérisé en ce qu'**il comprend :

• des capteurs de proximité à hautes performances (3), tels que des capteurs à courants de Foucault, pour obtenir des mesures continues de la rugosité de la surface de la jupe du piston,
• des amplificateurs (9) pour amplifier et conditionner les signaux obtenus par lesdits capteurs,
• un système d'acquisition de données (10) pour acquérir lesdits signaux amplifiés et conditionnés, et
• un ordinateur (11) agencé pour comparer la rugosité mesurée (R) à une rugosité de référence standard,

et **en ce qu'**il est agencé afin d'utiliser l'approche mathématique suivante pour la rugosité mesurée R :

$$R = \int_{\theta=0}^{\theta=2\pi} r(\theta)\, d\theta$$

avec :
θ - angle de vilebrequin ;
r (θ) - rugosité moyenne mesurée avec lesdits capteurs en fonction de θ.

2. Système pour surveiller et détecter l'éraillure entre des pistons et des chemises sur des moteurs et une machinerie alternatifs selon la revendication 1, **caractérisé en ce que** les capteurs de proximité (3) sont montés près des orifices d'échappement des chemises dans les moteurs à deux temps.

3. Système pour surveiller et détecter l'éraillure entre des pistons et des chemises sur des moteurs et une machinerie alternatifs selon la revendication 1, **caractérisé en ce que** les capteurs de proximité (3) sont installés sur la partie inférieure des chemises dans des moteurs à quatre temps.

4. Système pour surveiller et détecter l'éraillure entre des pistons et des chemises sur des moteurs et une machinerie alternatifs selon la revendication 1, **caractérisé en ce que** les capteurs de proximité (3) sont installés sur des logements appropriés dans des chemises de moteurs à quatre temps.

5. Système pour surveiller et détecter l'éraillure entre des pistons et des chemises sur des moteurs et une machinerie alternatifs selon la revendication 1, **caractérisé en ce qu'**il permet la détermination des gorges de piston sur des pistons par l'intermédiaire de la caractérisation de leur surface de contact en matière de rugosité et la vérification de son mouvement à l'intérieur des gorges respectives.

6. Système pour surveiller et détecter l'éraillure entre des pistons et des chemises sur des machines alternatives selon la revendication 1, **caractérisé en ce qu'**il permet la détermination de l'alignement du piston dans la chemise par l'intermédiaire de la mesure de la distance du centre à la chemise.

7. Système pour surveiller et détecter l'éraillure entre des pistons et des chemises sur des moteurs et une machinerie alternatifs selon la revendication 1, **caractérisé en ce qu'**il permet la détermination de l'ovalisation du piston dans la chemise par l'intermédiaire de la détermination de la différence entre les distances selon les deux axes principaux du moteur.

**Fig. 1**

**Fig. 2**

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0438360 A
- US 4143319 A
- US 20030177821 A
- EP 0652426 A